# FASCICULE DE BREVET EUROPEEN

(11) **EP 0 558 510 B1**
(45) Date de publication et mention de la délivrance du brevet: **07.06.1995**
(21) Numéro de dépôt: 91918441.6
(22) Date de dépôt: 25.10.1991
(51) Int. Cl.: C22B 7/04, C22B 21/00

(54) **TRAITEMENT DES SCORIES DANS UN FOUR A ARC ROTATIF**
BEHANDLUNG VON SCHLACKEN IN EINEM LICHTBOGENDREHOFEN
SLAG PROCESSING IN A ROTARY ARC FURNACE

(30) Priorité: 23.11.1990 CA 2030727
(43) Date de publication de la demande: 08.09.1993
(73) Titulaire: HYDRO QUEBEC, Montréal H2Z 1A4, Québec (CA)
(72) Inventeur: DROUET, Michel, G., Mont St Hilaire, Québec J3G 4S6 (CA)
(74) Mandataire: Rodhain, Claude
(86) Numéro de dépôt international: CA9100387
(87) Numéro de publication internationale: WO9209708

(56) Documents cités:
- CA-A- 1 255 914
- US-A- 4 217 462
- PLASMA CHEM. & PLASMA PROCESSING vol. 9, no. 1, Mars 1989, BRISTOL, GB pages 85- 118; D. R. MACRAE: 'Plasma Arc Process Systems, Reactors and Applications'

## Description

La présente invention a pour objet un procédé de traitement à haute température de scories contenant des métaux, en vue de récupérer ces derniers.

Plus précisément, l'invention a pour objet un procédé de traitement des scories de métaux, notamment d'aluminium, dans un four rotatif ou oscillant, en vue de récupérer ces métaux.

Dans la description qui suivent, seul l'aluminium est spécifiquement mentionné. Si la récupération de ce métal très particulier des scories produites à la surface des bains d'aluminium est effectivement une des applications les plus importantes du procédé selon l'invention, il convient de mentionner que l'invention décrite et revendiquée ne doit pas être interprétée comme étant spécifiquement restreinte à ce métal, le procédé étant en effet applicable à la récupération d'autres métaux.

L'aluminium produit par réduction électrolytique de l'alumine est transféré dans des fours dits "de maintien", où le métal est maintenu en fusion avant d'être transféré vers des unités de laminage ou d'autres unités de traitement. Durant ce "maintien", une mousse d'aluminium et d'alumine, ci-après appelée "scories" (dross), se forme à la surface du métal. Les scories ainsi produites, qui peuvent représenter jusqu'à 5% du bain de métal en fusion, contiennent une quantité importante d'aluminium, de l'ordre de 50%, qu'il est bien sûr intéressant de récupérer pour des raisons économiques évidentes. En pratique, cette récupération peut être effectuée par traitement à haute température des scories dans un four.

À cet effet, plusieurs fours ont été développés et sont couramment utilisés dans les alumineries. À la connaissance de la Demanderesse, les fours existants sont exclusivement chauffés par des torches à mazout, des torches à gaz ou des torches à plasma.

L'utilisation de torches à mazout ou à gaz pour chauffer les scories dans un four en vue d'extraire l'aluminium contenu dans les scories, présente l'inconvénient de nécessiter un ajout de sels fluxants pour augmenter la quantité d'aluminium récupérée.

L'utilisation d'une torche à plasma telle que suggérée dans le brevet canadien no. 1.255.914 délivré le 20 avril 1990 au nom de la Société Alcan International Ltée permet de remédier à l'inconvénient ci-dessus mentionné en objet. En effet, l'utilisation d'une torche à plasma permet d'obtenir des températures supérieures dans le four et, de là, éviter l'ajout de sels fluxants. L'utilisation des torches à plasma a toutefois un inconvénient dû à la structure même des torches existantes qui sont refroidies à l'eau. En effet, en cas de fuite d'eau, de fortes explosions peuvent se produire et conduire à des accidents graves.

Dans le brevet canadien no. 1.255.914 précité, il est essentiellement suggéré d'opérer la torche à plasma en mode arc soufflé. Il est toutefois mentionné en page 6 du mémoire descriptif que, dans certains cas, l'on pourrait le cas échéant opérer la torche en mode arc transféré. Ce brevet n'explique toutefois pas comment un tel transfert d'arc peut être effectué en pratique ni les avantages qui pourraient en découler.

Dans les deux cas, de toute façon, une torche à plasma nécessairement refroidie à l'eau est utilisée pour générer l'arc, avec les inconvénients que cela peut présenter.

La présente invention a pour objet un nouveau procédé pour traiter les scories d'un métal, notamment d'aluminium, en vue de récupérer le métal contenu dans celles-ci, lequel procédé permet de remédier à la totalité des inconvénients ci-dessus mentionnés en objet.

Plus précisément, la présente invention a pour objet un procédé de traitement des scories d'un métal à l'aide d'un four rotatif ou oscillant, lequel procédé est beaucoup moins polluant dans la mesure où il ne requiert pas l'apport de sels fluxants, et beaucoup plus économique dans la mesure où il ne requiert pas de quantité importante de gaz plasmagène, coûteux comme dans le cas où une torche à plasma est utilisée.

L'invention a également pour objet un procédé de traitement des scories d'un métal, lequel procédé est beaucoup plus sécuritaire dans la mesure où aucune pièce n'a besoin d'être refroidie à l'eau et où donc il n'y a aucun risque d'explosion en cas de fuite.

L'invention a en outre pour objet un procédé de traitement des scories de métal, lequel est plus efficace que la totalité des procédés actuellement connus, inclus le procédé utilisant une torche à plasma, dans la mesure où, d'une part, le chauffage s'effectue essentiellement par rayonnement plutôt que par convection et où, d'autre part, il n'y a pas de pertes thermiques dues au refroidissement à l'eau des torches ou à l'échappement hors du four, de quantité importante de gaz de combustion lorsque les brûleurs sont utilisés.

Le procédé selon l'invention de traitement des scories d'un métal en vue de récupérer ce métal contenu dans ces scories est du type dans lequel:
- on introduit les scories à traiter dans un four rotatif ou oscillant ayant un axe longitudinal horizontal en usage;
- on chauffe ces scories dans le four à une température supérieure à celle de fusion du métal à récupérer;
- on fait tourner ou osciller le four autour de son axe longitudinal tandis que les scories sont chauffées pour favoriser la séparation du métal contenu dans ces scories;
- on retire du four le métal séparé des scories; et
- on retire ensuite du four les scories restantes.

Selon l'invention, ce procédé est caractérisé en ce que le four utilisé est un four à arc rayonnant, comprenant deux électrodes opposées entre lesquelles un arc électrique est formé et maintenu pour assurer le chauffage. Ces deux électrodes sont alignées sur l'axe longitudinal du four.

La rotation ou l'ossillation du four peut être de l'ordre de 1 à 20 tours ou oscillations par minute et est de préférence de l'ordre de 10 tours par minute.

Cette rotation ou oscillation peut s'effectuer de façon continue ou intermittente.

Le procédé selon l'invention est enfin caractérisé en ce que les deux électrodes utilisées sont en graphite et ne sont pas refroidies à l'eau. De préférence, ces deux électrodes sont montées aux deux extrémités de l'axe longitudinal du four, de façon à pouvoir être avancées l'une vers l'autre au fur et à mesure de leur érosion. Ceci rend en pratique la structure du fur utilisé selon l'invention très similaire au four à arc rayonnant de type Mazières, connu des métallurgistes.

De façon à stabiliser l'arc le long de l'axe longitudinal, du four, au moins une des deux électrodes peut être pourvue d'un petit trou axial dans lequel un gaz plasmagène, qui peut être constitué d'argon, d'azote, d'hydrogène, de méthane, de monoxyde ou de dioxyde de carbone, ou encore d'air, peut être introduit. Comme on peut donc le constater, le procédé selon l'invention fait usage d'un four à arc rayonnant qui ne requiert qu'un apport minimum et facultatif de gaz plasmagène, contrairement au four chauffé à l'aide d'une torche à plasma où le débit de gaz plasmagène doit nécessairement être très grand.

Le four utilisé étant un four à arc rayonnant, le chauffage de la scorie s'effectue directement par rayonnement, contrairement au cas du four à torche à plasma où le chauffage s'effectue par convection avec le gaz plasmagène chauffé s'échappant de la torche.

L'arc étant généré entre deux électrodes solides, en graphite, aucun refroidissement à l'eau n'est requis. Ceci élimine donc à la source tout risque d'explosion.

L'invention ainsi que ses divers avantages ressortiront mieux à la lecture de la description plus détaillée mais non limitative qui va suivre, de la façon dont le procédé selon l'invention peut être mis en oeuvre.

Tel que précédemment indiqué, le procédé selon l'invention utilise un four à arc rayonnant de type rotatif ou oscillant. Ce four à arc rayonnant est de préférence une chambre interne de forme généralement ovale, dont le grand axe ci-après appelé axe longitudinal, est horizontal. Bien entendu, ce four est équipé de moyens permettant de l'entraîner en rotation, de préférence autour de son axe longitudinal.

Divers types de four rotatif à arc rayonnant ont déjà été imaginés et sont actuellement utilisés en métallurgie. À titre d'exemple de tels fours, on peut mentionner notamment celui connu sous le nom de son inventeur, Mazières. Ce four comprend une chambre qui, dans ce cas particulier, est cylindrique plutôt qu'ovale. À une de ses deux extrémités, une porte permet le dépôt et le retrait des substances à traiter. Ce four est également pourvu de moyens permettant de l'incliner pour abaisser l'une ou l'autre de ses deux extrémités.

À chaque extrémité du four se trouve une électrode alignée sur l'axe horizontal. Ces électrodes ont leurs extrémités disposées à l'intérieur de la chambre de façon à se faire face. La distance séparant les deux électrodes peut être ajustée à volonté à l'aide de moyens de déplacements connus en soi, qui peuvent être automatisés de façon à ajuster la longueur de l'arc en fonction des conditions d'opération choisies.

Selon l'invention, les électrodes utilisées sont faites en graphite.

L'avantage d'utiliser le graphite est que ce matériau est très résistant et assure aux électrodes une durée de vie prolongée permettant de réduire en conséquence les interruptions du four pour un changement d'électrodes.

Selon un mode tout particulièrement avantageux de réalisation, les électrodes peuvent être pourvues d'un trou axial permettant l'introduction d'un gaz plasmagène sous la forme d'un mince filet soufflé coaxialement à l'axe longitudinal du four. L'avantage de ce mince filet de gaz est de stabiliser l'arc et d'assurer que celui-ci se propage axialement au centre du four. Ce filet de gaz peut aussi servir à faciliter l'amorçage de l'arc d'une électrode à l'autre, lors du démarrage du four.

Le gaz plasmagène utilisé peut être constitué d'argon, d'azote, d'hydrogène, de méthane, de monoxyde ou de dioxyde de carbone ou même d'air, ou des mélanges de ceux-ci. Le choix d'un gaz particulier peut également présenter un avantage pour faire subir un traitement additionnel simultané au métal à récupérer.

Le procédé de traitement des scories selon l'invention est amorcé en introduisant les scories à traiter à l'intérieur de la chambre du four. On procède alors au chauffage de ce dernier en reliant les électrodes à une source de courant à l'aide des moyens de connexion connus en soi, puis en établissant à l'aide de cette source de courant un arc entre les deux électrodes. Tel que précédemment indiqué, la formation de l'arc peut être favorisée en introduisant un filet de gaz à l'intérieur de la chambre dans un trou axial prévu dans une et de préférence les deux électrodes, ce filet de gaz étant projeté à une pression suffisante pour maintenir l'arc sur l'axe de rotation du four.

Une fois créé, l'arc qui s'étend entre les extrémités des deux électrodes, chauffe par rayonnement les scories jusqu'à des températures d'environ 1 000°C. En amorçant le chauffage, la rotation ou l'oscillation du four est simultanément amorcée autour de l'axe de ce dernier. Cette rotation peut varier entre 1 à 20 tours par minute mais est de préférence maintenue de l'ordre de 10 tours, une fois que la température de traitement désirée a été atteinte. Il est bien entendu qu'au lieu de procéder à une rotation complète du four, on peut procéder à une simple oscillation de celui-ci autour de son axe.

Les autres conditions d'opération et traitement à l'intérieur du four, dans le cas particulier du procédé selon l'invention, sont sensiblement identiques à ce que l'on trouve décrit dans le brevet canadien no. 1.255.914.

Une fois le traitement complété, la rotation est arrêtée ainsi que le chauffage. La porte du four est alors ouverte, l'électrode disposée du côté de cette porte est reculée et le four est incliné du côté de son extrémité ouverte pour verser l'aluminium liquide. Cette récupération s'effectue par simple coulée. Une fois la récupération achevée, les scories peuvent alors être récupérées de façon conventionnelle.

## Revendications

1. Procédé de traitement des scories d'un métal en vue de récupérer ledit métal contenu dans lesdites scories, dans lequel:
- on introduit les scories à traiter dans un four rotatif ou oscillant ayant un axe longitudinal horizontal en usage;
- on chauffe lesdites scories dans le four à une température supérieure à celle de fusion du métal à récupérer;
- on fait tourner ou osciller le four autour de son axe longitudinal tandis que les scories sont chauffées, pour favoriser la séparation du métal des scories;
- on retire du four le métal séparé des scories; et
- on retire ensuite du four les scories restantes;
caractérisé en ce que le four utilisé est un cour à arc rayonnant comprenant deux électrodes opposées alignées sur l'axe longitudinal du four et entre lesquelles un arc électrique est formé et maintenu pour assurer le chauffage, lesdites électrodes étant faites en graphite et n'étant pas refroidies à l'eau.

2. Procédé selon la revendication 1, caractérisé en ce que au moins une des deux électrodes est pourvue d'un trou axial et en ce qu'un gaz plasmagène est injecté par ledit trou dans le four pour stabiliser l'arc le long de l'axe longitudinal.

3. Procédé selon la revendication 2, caractérisé en ce que le gaz plasmagène injecté est choisi dans le groupe constitué par Ar, N₂, H₂, CH₄, CO et des mélanges de ceux-ci.

4. Procédé selon l'une quelconque des revendications 1 à 3, caractérisé en ce que la rotation ou l'oscillation du four est effectuée de façon continue.

5. Procédé selon l'une quelconque des revendications 1 à 3, caractérisé en ce que la rotation ou l'oscillation du four est effectuée de façon intermittente.

6. Procédé selon l'une quelconque des revendications 1 à 5, caractérisé en ce que le four utilisé est un four à arc rayonnant de type Mazières.

7. Procédé selon l'une quelconque des revendications 1 à 6, caractérisé en ce que le four a une chambre interne de forme généralement ovale.

8. Procédé selon l'une quelconque des revendications 1 à 7, caractérisé en ce que les scores traitées sont des scories d'aluminium et en ce que le métal à récupérer est l'aluminium.

## Claims

1. A process for treating a dross containing a metal in order to recover said metal contained in said dross, comprising:
- introducing the dross to be treated into a rotary or oscillating furnace having a longitudinal axis in use;
- heating the dross inside said furnace to a temperature above the melting point of the metal to be recovered;
- rotating or oscillating the furnace about its longitudinal axis while the dross is heated, to cause the metal to be recovered to separate from the dross;
- removing from the furnace the metal separated from the dross; and
- then removing the balance of the dross from the furnace,
characterized in that the furnace that is being used is a radiating arc furnace comprising two opposite electrodes aligned with the longitudinal axis of the furnace and between which an electrical arc is formed and held to provide the requested heating, said electrodes being made of graphite and being not water-cooled.

2. Process according to claim 1, characterized in that at least one of the electrodes is provided with an axial bore and in that a plasma gas is injected through said bore in order to stabilize the air along the longitudinal axis.

3. Process according to claim 2, characterized in that the injected plasma gas is selected from the group consisting of Ar, N₂, H₂, CH₄, CO and mixtures thereof.

4. Process according to any one of claims 1 to 3, characterized in that the rotation or oscillation of the furnace is carried out in a continuous manner.

5. Process according to any one of claims 1 to 3, characterized in that the rotation or oscillation of the furnace is carried out in an intermittent manner.

6. Process according to any one of claims 1 to 5, characterized in that the furnace that is used is a radiating arc furnace of the Mazières type.

7. Process according to any one of claims 1 or 6, characterized in that the furnace has an internal chamber that is generally ovoid in shape.

8. Process according to any one of claims 1 to 7, characterized in that the dross that is treated is an aluminum dross and the metal to be recovered is aluminum.

## Patentansprüche

1. Verfahren zur Verarbeitung von Schlacke eines Metalls zur Rückgewinnung dieses Metalls, das in der Schlacke enthalten ist, in dem
- die zu verarbeitende Schlacke in einen Rotor- oder Schaukelofen mit einer im Betrieb horizontalen Längsachse eingebracht wird,
- die Schlacke im Ofen auf eine Temperatur erhitzt wird, die über der Schmelztemperatur des rückzugewinnenden Metalls liegt,
- der Ofen um seine Längsachse rotieren oder oszillieren gelassen wird, während die Schlacke erhitzt wird, um die Trennung des Metalls von der Schlacke zu erleichtern,
- dem Ofen das von der Schlacke getrennte Metall entnommen wird und
- dem Ofen anschließend die verbleibende Schlacke entnommen wird,
dadurch gekennzeichnet, daß der verwendete Ofen ein Lichtbogenofen ist, der zwei einander auf der Längsachse des Ofens gegenüberliegende Elektroden aufweist, zwischen denen ein Lichtbogen gezündet und aufrechterhalten wird, um die Beheizung sicherzustellen, wobei diese Elektroden aus Graphit bestehen und nicht mit Wasser gekühlt werden.

2. Verfahren nach Patentanspruch 1, dadurch gekennzeichnet, daß mindestens eine der beiden Elektroden mit einem axialen Loch versehen ist und dadurch, daß ein plasmagenes Gas durch dieses Loch in den Ofen eingelassen wird, um den Lichtbogen entlang der Längsachse zu stabilisieren.

3. Verfahren nach Patentanspruch 2, dadurch gekennzeichnet, daß das eingelassene plasmagene Gas aus der Gruppe gewählt wird, die aus Ar, N₂, H₂, CH₄, CO und Mischungen aus diesen besteht.

4. Verfahren nach irgendeinem der Patentansprüche 1 bis 3, dadurch gekennzeichnet, daß die Rotation oder die Oszillation des Ofens kontinuierlich erfolgt.

5. Verfahren nach irgendeinem der Patentansprüche 1 bis 3, dadurch gekennzeichnet, daß die Rotation oder die Oszillation des Ofens intermittierend erfolgt.

6. Verfahren nach irgendeinem der Patentansprüche 1 bis 5, dadurch gekennzeichnet, daß der verwendete Ofen ein Lichtbogenofen vom Mazières-Typ ist.

7. Verfahren nach irgendeinem der Patentansprüche 1 bis 6, dadurch gekennzeichnet, daß der Ofen eine Innenkammer im wesentlichen ovaler Form aufweist.

8. Verfahren nach irgendeinem der Patentansprüche 1 bis 7, dadurch gekennzeichnet, daß die verarbeitete Schlacke Aluminiumschlacke und das rückzugewinnende Metall Aluminium ist.
